# EUROPÄISCHE PATENTANMELDUNG

(11) **EP 0 622 167 A1**
(43) Veröffentlichungstag der Anmeldung: **02.11.1994**
(21) Anmeldenummer: 94102862.3
(22) Anmeldetag: 25.02.1994
(51) Int. Cl.: B29C 51/22, B29C 51/44, B29C 31/00

(54) **Vorrichtung zum Herstellen von Glasfaser-Vorformlingen**

(30) Priorität: 29.04.1993 DE 4314078
(71) Anmelder: Krauss-Maffei Aktiengesellschaft, D-80997 München (DE)
(72) Erfinder: Bauer, Adolf, D-82140 Olching (DE); Müller, Wolfgang, D-85238 Petershausen (DE); Krader, Christoph, D-93142 Maxhütte (DE)

(57) **Zusammenfassung**

Bei einer Vorrichtung zum Herstellen von Glasfaser-Vorformlingen (16) aus Glasfaserendlosmatten (1) für den anschließenden Verbund mit Polyurethan sind zwei gleiche untere Formhälften (11,12) vorgesehen, wobei in jeweils einer unteren Formhälfte ein abgelängtes Glasmattenteil (5) durch Zusammenwirken mit einem Formoberteil (13) zunächst zu einem Glasfaser-Vorformling ausgeformt wird, dessen Randbereich anschließend durch Zusammenwirken derselben unteren Formhälfte mit einem Stanzstempel (14) abgestanzt wird. Um ohne Einschränkung der Produktionsgeschwindigkeit den Maschinenaufwand zu verringern, wird vorgeschlagen, zwei gleiche untere Formhälften (11,12) auf einem Karusseltisch (10) anzuordnen die wechselweise mit einem Formoberteil (13) und einem Stanzstempel (14) zusammenwirken.

## Beschreibung

Die Erfindung betrifft eine Vorrichtung zum Herstellen von Glasfaser-Vorformlingen gemäß Oberbegriff des Anspruchs 1.

Bei Vorrichtungen dieser Art sind die beiden unteren Formhälften auf einem quer zur Transportrichtung verschiebbaren Schlitten angeordnet, mit dem die beiden unteren Formhälften von der Preßstation im wechselweisen Takt jeweils zu einer der beiden neben der Preßstation angeordneten Stanzstationen zuführbar sind. Bei dieser Einrichtung sind zwei Stanzstationen erforderlich, wobei die fertig gestanzten Bauteile von den beiden Stanzstationen zum weiteren Transport wieder zu einem gemeinsamen Transportstrang zusammenzuführen sind.

Der Erfindung liegt die Aufgabe zugrunde, bei einer Vorrichtung der vorbeschriebenen Art den Maschinenaufwand zu verringern und die Transporteinrichtung zu vereinfachen.

Zur Lösung dieser Aufgabe sieht die Erfindung vor, daß zwei untere Formhälften auf einem drehbaren Karusselltisch angeordnet sind, der zwischen zwei in Richtung des Transportbandes hintereinander gelegenen Stellungen bewegbar ist, in denen in der Preßstation die eine untere Formhälfte mit dem Formoberteil und gleichzeitig in der Stanzstation die andere untere Formhälfte mit dem Stanzstempel zusammenwirkt.

Für die Erfindung wesentlich ist somit, daß ohne Einschränkung der Produktionsgeschwindigkeit eine Stanzvorrichtung eingespart werden kann und daß die Einrichtungen zum Weitertransport der fertigen Bauteile ab der Stanzstation vereinfacht werden können.

In bevorzugt weiterer Ausgestaltung der Erfindung können die auf dem Karusselltisch angeordneten, aus jeweils zwei unteren Formhälften, der oberen Formhälfte und dem Stanzstempel bestehenden Werkzeuge ausgewechselt werden durch zwei andere Werkzeuge, die sich auf einem von zwei an den Karusseltisch anschließenden stationären Lagertischen in Bereithaltung befinden. Der Wechselvorgang findet in der Weise statt, daß die auf dem Karusseltisch angeordneten Werkzeuge auf den leeren stationären Lagertisch in eine Warteposition geschoben werden, wobei die anderen, auf dem zweiten Lagertisch in Bereitstellung befindlichen Werkzeuge auf den Karusseltisch geschoben werden. Die Umstellung kann sehr schnell erfolgen, was sich z.B. in der Fertigung von Armaturenbrettern für Kraftfahrzeuge vorteilhaft auswirkt, wenn vorübergehend von der Fertigung von Armaturenbrettern für linksgesteuerte Fahrzeuge auf die Fertigung von Armaturenbrettern für rechtsgesteuerte Fahrzeuge umgestellt werden muß.

Eine Ausführungsform der Erfindung wird im folgenden anhand der Zeichnung näher erläutert. Es zeigt:
- Fig. 1: schematisch die Seitenansicht einer Anlage zum Herstellen von Glasfaser-Vorformlingen,
- Fig. 2: die Schnittansicht auf den Karusselltisch gemäß der Schnittlinie II-II in Fig. 1.

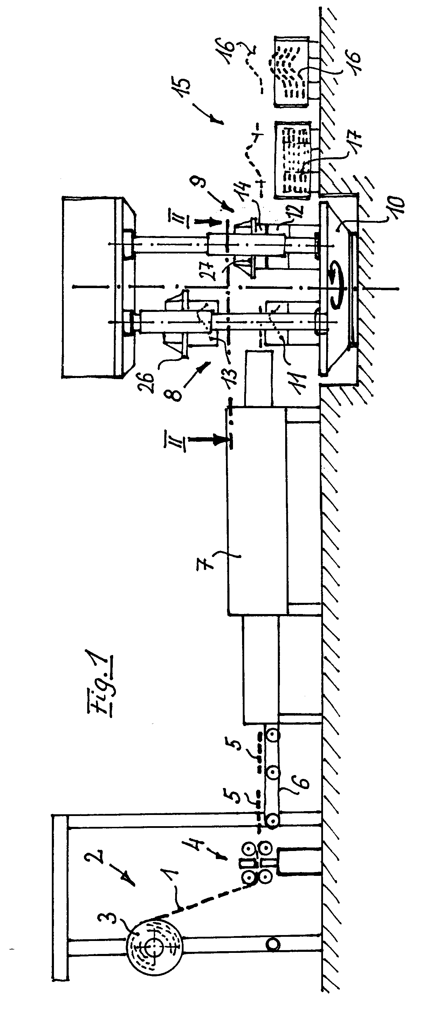

In Fig. 1 ist eine Anlage zur Herstellung von Glasfaser-Vorformlingen aus einer Glasfaserendlosmatte 1 dargestellt. Die Glasfaserendlosmatte 1 ist in der Matteneinzugsstation 2 in einer Rolle 3 gelagert, von der die Glasfaserendlosmatte 1 abgewickelt und anschließend in eine Ablängstation 4 eingezogen wird, in der die Glasfasermatte 1 in Glasfaserteilstücke 5 geschnitten wird. Die Glasfaserteilstücke 5 werden im weiteren mittels eines Transportbandes 6 über eine Heizstation 7 zu einer Preßstation 8 und einer Stanzstation 9 transportiert.

Sowohl die Preßstation 8 als auch die Stanzstation 9 befinden sich auf einem Karusselltisch 10, der zwei identische untere Formhälften 11 und 12 trägt und die in abwechselnder Folge in der Preßstation 8 mit dem Formoberteil 13 und in der Stanzstation 9 mit dem Stanzstempel 14 zusammenwirken. An den Karusselltisch 10 bzw. an die Preß- und Stanzstation 8 und 9 schließt sich eine Entnahmeeinheit 15 an, in der zunächst der vom Glasfaser-Vorformling 16 abgestanzte, meist ringförmige Stanzabfall 17 entfernt wird und in der der fertige Glasfaser-Vor-formling 16 abgelagert wird, von wo dieser für den anschließenden Beschichtungsvorgang mit Polyurethan (nicht dargestellt) entnommen werden kann.

Im Betrieb gelangt das Glasfaserteil 5 nach dem Aufheizen in der Heizstation 7 in die eine untere Formhälfte 11 in der Preßstation 8, in der durch Absenken des Formoberteils 13 und durch Anheben der unteren Formhälfte 11 das Glasfaserteilstück 5 seine Ausformung erfährt. Gleichzeitig mit der Ausformung des Glasfaserteilstücks 5 in der Preßstation 8 werden in der Stanzstation 9 bei einem zuvor gepreßten Glasfaserteilstück 5 die überflüssigen Randbereiche abgestanzt.

Nach der Entnahme des Glasfaser-Vorformlings 16 mit den abgestanzten Randbereichen wird der Karusselltisch 10 gedreht, so daß zum einen die leere untere Formhälfte 12 zur Preßstation 8 gelangt und dort mit einem aufgeheizten Glasfaserteilstück 5 belegt werden kann und zum anderen die mit dem zuvor gepreßten Glasfaserteilstück 5 belegte untere Formhälfte 12 zur Stanzstation 9 gelangt.

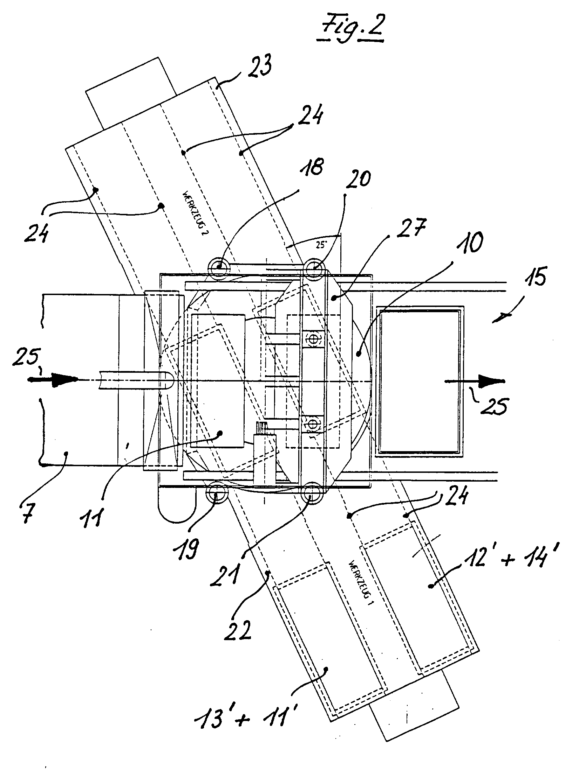

Die Fig. 2 zeigt die Draufsicht auf den Karusselltisch 10 entsprechend der Schnittlinie II-II in Fig. 1 mit der unteren Formhälfte 11 und dem die andere untere Formhälfte 12 überdeckenden Stanzstempel 14. Außerhalb des Karusselltisches 10 befinden sich die Holme 18 und 19 der Preßstation 8 und die Holme 20 und 21 der Stanzstation 9.

Am Karusselltisch 10 sind im Winkel von 25^{o} zwei stationäre Lagertische 22 und 23 angeordnet, von denen der Lagertisch 22 zwei weitere aus unteren Formhälften 11' und 12' und aus einem Formoberteil 13' und einem Stanzstempel 14' bestehende Werkzeuge trägt. Sowohl der Karusseltisch 10 als auch die beiden stationären Lagertische 22 und 23 weisen Verschiebebahnen 24 (unterbrochene Linien) auf, mittels denen durch Verschieben die auf dem Karusseltisch 10 befindlichen Werkzeuge durch die auf dem Lagertisch 22 in Bereithaltung angeordneten Werkzeuge ausgewechselt werden können. Die ursprünglich auf dem Karusseltisch 10 angeordneten Werkzeuge werden auf den anderen stationären Lagertisch 23 in Wartestellung geschoben. Der Winkel mit dem die Lagertische 23 und 24 zur Querachse der Haupttransportrichtung (Pfeil 25) angeordnet sind, ist so gewählt, daß die beiden Werkzeugpaare auf den Verschiebebahnen 24 frei zwischen den Holmen 18 bis 21 verschoben werden können. In gleicher Weise, jedoch in spiegelbildlicher Anordnung zur Querachse der Haupttransportrichtung können noch zwei weitere Lagertische (nicht dargestellt) angeordnet werden mit denen noch ein drittes Werkzeug-Paar zur schnellen Auswechslung bereitgehalten werden kann.

## Patentansprüche

1. Vorrichtung zum Herstellen von Glasfaser-Vorformlingen aus Glasfaserendlosmatten für den anschließenden Verbund mit Polyurethan, bestehend aus einer Glasmatten-Einzugsstation, einer Glasmatten-Ablängstation, einem Transportband zum Transport der abgelängten Glasmattenteile über eine Heizstation zu einer Preß- und Stanzstation, in der mindestens zwei untere Formhälften in wechselnder Abfolge mit einem Formoberteil bei Zwischenlage eines Glasmattenteils und einem Stanzstempel zusammenwirken, **dadurch gekennzeichnet**, daß zwei untere Formhälften (11,12) auf einem drehbaren Karusselltisch (10) angeordnet sind, der zwischen zwei in Richtung (Pfeil 25) des Transportbandes (6) hintereinander gelegenen Stellungen bewegbar ist, in denen in der Preßstation (8) die eine untere Formhälfte (11) mit dem Formoberteil (13) und gleichzeitig in der, Stanzstation (9) die andere untere Formhälfte (12) mit dem Stanzstempel (14) zusammenwirkt.

2. Vorrichtung nach Anspruch 1, **dadurch gekennzeichnet**, daß sich zu beiden Seiten des Karusselltisches (10) mindestens zwei stationäre Lagertische (22) und (23) anschließen, wobei am Karusselltisch (10) und an den Lagertischen (22) und (23) Verschiebebahnen (24) angeordnet sind, auf denen zum Zweck der reversierbaren Auswechslung die auf dem Karusselltisch (10) angeordneten, aus unterer und oberer Formhälfte (11) und (13) sowie aus unterer Formhälfte (12) und Stanzstempel (14) bestehenden Werkzeuge durch auf einem der Lagertische (22,23) in Bereithaltung angeordnete, aus unterer Formhälfte (11') und oberer Formhälfte (13') sowie unterer Formhälfte (12') und Stanzstempel (14') bestehende Werkzeuge durch Verschieben austauschbar sind und wobei die Lagertische (22) und (23) in einem Winkel zur Querachse der Haupttransportrichtung (Pfeil 25) nach der Maßgabe angeordnet sind, daß die Verschiebebahnen (24) hindernisfrei zwischen den Säulen (18) bis (21) der Preß- und Stanzstationen (8) und (9) verlaufen.
